# EUROPEAN PATENT APPLICATION

(11) **EP 4 389 479 A1**
(43) Date of publication of application: **26.06.2024**
(21) Application number: 23213270.4
(22) Date of filing: 30.11.2023
(51) Int. Cl.: B60K 1/00

(54) **ELECTRIC VEHICLE**

(30) Priority: 20.12.2022 JP 2022203488
(71) Applicant: Suzuki Motor Corporation, Hamamatsu-shi, Shizuoka 432-8611 (JP)
(72) Inventor: YAMADA, Masashi, Hamamatsu-shi, 432-8611 (JP)
(74) Representative: Haseltine Lake Kempner LLP

(57) **Abstract**

An electric vehicle includes a bracket which includes a front support, a rear support, and a connecting member. The front support is secured to a front end of a PCU (Power Control Unit). The rear support is secured to a rear end of the PCU. The connecting member connects the front support and the rear support together. The rear support has a rear wall which faces a dash panel. The rear wall is shaped to have an interval between itself and a rear surface of the PCU in a longitudinal direction of the electric vehicle. The interval increases from a lower side to an upper side of the electric vehicle. A generator and a traction motor are disposed in a storage chamber enclosed by the right case and the left case. The bracket is securely attached to the right case and the left case using bracket fastening bolts. The above structure serves to minimize a risk that the PCU may be damaged due to a physical contact with the dash panel upon a head-on collision of the electric vehicle.

## Description

### 1 Technical Field

The present invention relates generally to an electric vehicle.

### 2 Background Art

Japanese Patent First Publication No. 2015-137010 discloses an electric vehicle designed to secure a control unit to a transaxle case in which an electric motor is installed. The control unit works to control an operation of the electric motor. The electric vehicle includes a unit case, a front bracket, a rear bracket, and a control cable. The unit case has the control unit disposed therein. The front bracket secures a front portion of the unit case to a front portion of the transaxle case. The rear bracket secures a rear portion of the unit case to a rear portion of the transaxle case. The control cable connects between the electric motor and the control unit. The front bracket has formed thereon protrusions which work, when the electric vehicle undergoes a head-on collision, as stopper to control the amount of rotation of the front bracket on a point where the front bracket is secured to the transaxle case. This minimizes a risk of physical damage to the control cable.

### [Citation List]

### [Patent Literature]

[Patent Literature 1] JP2015-137010A

The structure taught in the above publication, however, has a drawback in that a power controller (i.e., the control unit) may be forced backward by an impact from the front of the vehicle upon head-on collision of the vehicle, thereby causing a rear side surface of the power controller or connectors arranged on the rear side surface of the power controller to hit a dash panel, which results in physical damage thereto.

### SUMMARY OF THE INVENTION

The present invention was made in view of the above drawback. It is an object to provide an electric vehicle designed to eliminate a risk of physical damage to a power controller arising from collision of the power controller with a dash panel upon head-on collision of the electric vehicle.

According to one aspect of the invention, there is provided an electric vehicle which comprises: (a) a transaxle case which is disposed in an engine compartment arranged in front of a dash panel in an electric vehicle and in which a rotating electrical machine is disposed; (b) an electric power controller which is arranged above the transaxle case and works to control an operation of the rotating electrical machine; and (c) a bracket which secures the electric power controller to the transaxle case. The electric power controller is oriented to have a front portion located at a level lower than a rear portion thereof in a vertical direction of the electric vehicle. The bracket includes a front portion, a rear portion, and a connecting member. The front portion is secured to a front end of the electric power controller. The rear portion is secured to a rear end of the electric power controller. The connecting member is configured to connect the front support and the rear support together. The rear support has a rear wall facing the dash panel. The rear wall is shaped to have an interval between itself and a rear surface of the electric power controller in a longitudinal direction of the electric vehicle. The interval is selected to increase from a lower side to an upper side of the electric vehicle.

### BENEFICIAL ADVANTAGES OF THE INVENTION

The above-described invention is capable of providing an electric vehicle configured to eliminate a risk of physical damage to a power controller resulting from physical impact of the power controller against a dash panel upon head-on collision of the electric vehicle.

### BRIEF DESCRIPTION OF THE DRAWINGS

Fig. 1 is a left side view of a front portion of an electric vehicle according to an embodiment of the invention.
Fig. 2 is a back view of a transaxle case installed in an electric vehicle according to an embodiment of the invention.
Fig. 3 is a perspective view which illustrates a transaxle case installed in an electric vehicle according to an embodiment of the invention.
Fig. 4 is a view which illustrates an internal structure of a transaxle case installed in an electric vehicle according to an embodiment of the invention.
Fig. 5 is a plan view of a bracket installed in an electric vehicle according to an embodiment of the invention.
Fig. 6 is a left side view of a bracket installed in an electric vehicle according to an embodiment of the invention.
Fig. 7 is a front view of a bracket installed in an electric vehicle according to an embodiment of the invention.
Fig. 8 is a back view of a bracket installed in an electric vehicle according to an embodiment of the invention.
Fig. 9 is a left side view of a front portion of an electric vehicle subjected to a head-on collision in an embodiment of the invention.

### MODE FOR CARRYING OUT THE INVENTION

An electric vehicle according to an embodiment of the invention comprises a transaxle case which is disposed in an engine compartment arranged in front of a dash panel in an electric vehicle and in which a rotating electrical machine is disposed, an electric power controller which is arranged above the transaxle case and works to control an operation of the rotating electrical machine, and a bracket which secures the electric power controller to the transaxle case. The electric power controller is oriented to have a front portion located at a level lower than a rear portion thereof in a vertical direction of the electric vehicle. The bracket includes a front portion, a rear portion, and a connecting member. The front portion is secured to a front end of the electric power controller. The rear portion is secured to a rear end of the electric power controller. The connecting member is configured to connect the front support and the rear support together. The rear support has a rear wall facing the dash panel. The rear wall is shaped to have an interval between itself and a rear surface of the electric power controller in a longitudinal direction of the electric vehicle. The interval is selected to increase from a lower side to an upper side of the electric vehicle. This structure of the electric vehicle according to the embodiment of the invention is capable of eliminating a risk that the electric power controller may contact the dash panel so that it is physically damaged upon a head-on collision of the electric vehicle.

### EMBODIMENT

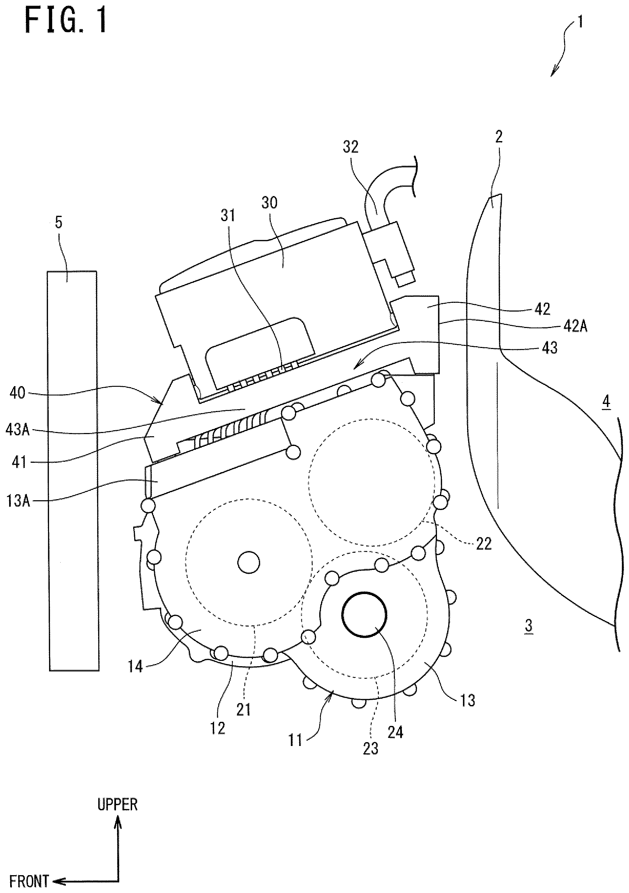

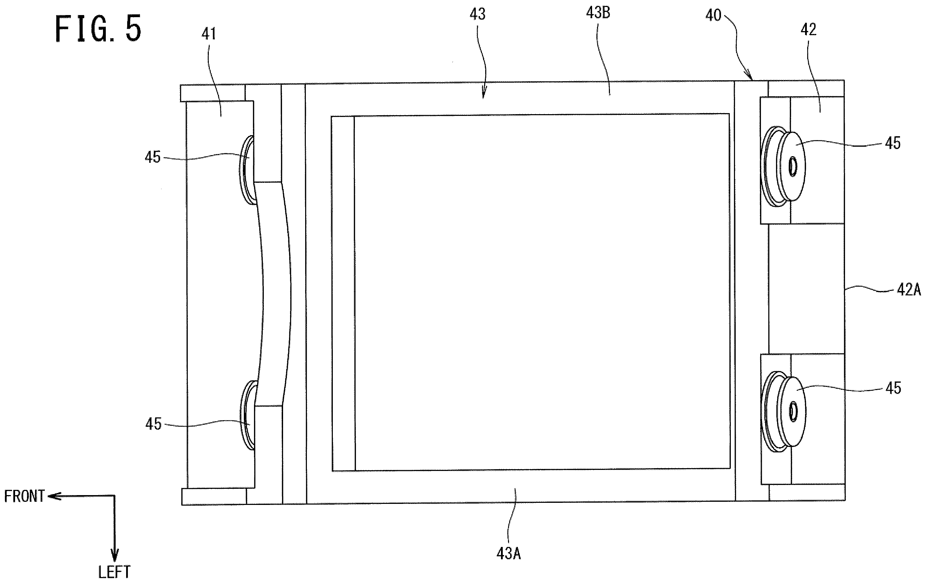

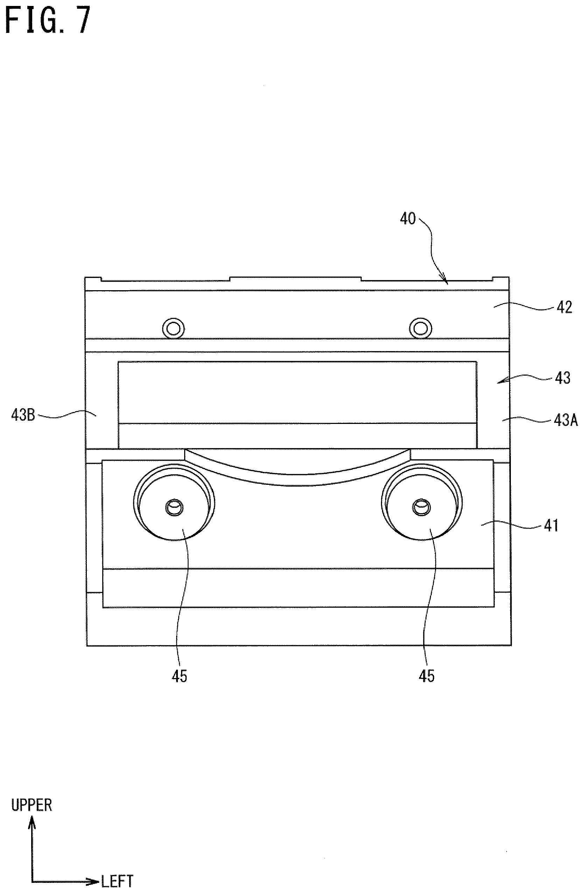

An electric vehicle according to an embodiment of the invention will be described below with reference to the drawings. Figs. 1 to 9 are views which illustrate the electric vehicle 1 in the embodiment of the invention.

The dash panel 2 is, as shown in Fig. 1, arranged in a front portion of the electric vehicle 1. The engine compartment 3 is defined in front of the dash panel 2 inside the electric vehicle 1. The dash panel 2 isolates the passenger compartment 4 and the engine compartment 3 from each other.

The transaxle case 11 is disposed inside the engine compartment 3. The transaxle case 11 has the generator 21, the traction motor 22, and the differential 23 disposed therein. The generator 21 works as a rotating electrical machine.

The PCU (Power Control Unit) 30 is disposed above the transaxle case 11. The PCU 30 works as an electric power controller. The PCU 30 is equipped with an inverter and a DC-DC converter, not shown, and works to control voltage at and electrical current to or from each of the generator 21 and the traction motor 22. The PCU 30 is inclined to have a front portion thereof located at a level lower than a front portion thereof. In other words, the PCU 30 is in a downward slant orientation. The upper surface of the transaxle case 11 is also oriented to have a front portion located at a level lower than a rear portion thereof.

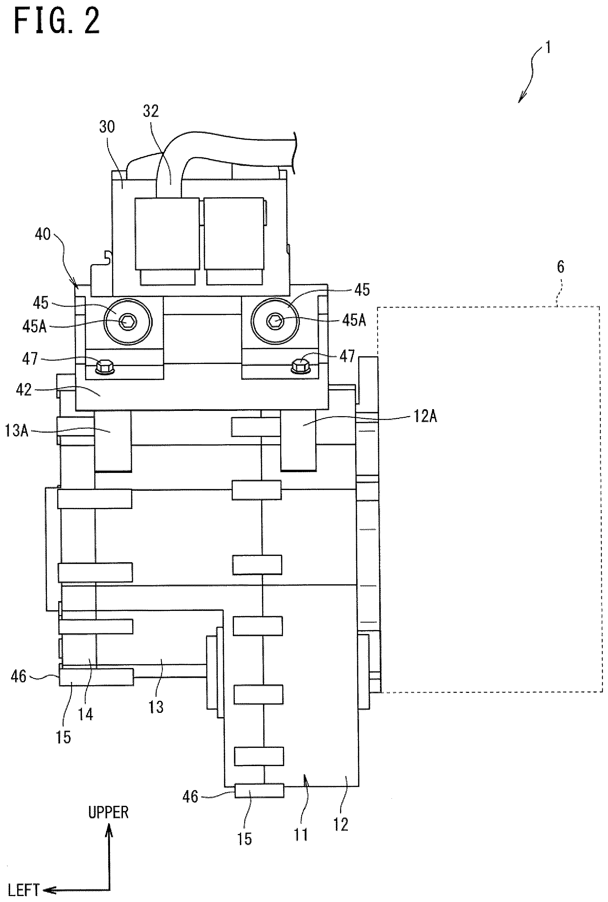

The radiator 5 is disposed in front of the transaxle case 11 within the engine compartment 3. The radiator 5 works as a heat exchanger to transfer thermal energy between cooling water circulating through the internal combustion engine 6 (see Fig. 2) and outside air.

The electric vehicle 1 is, as clearly illustrated in Fig. 2, equipped with the internal combustion engine 6. The internal combustion engine 6 is connected to a right side surface of the transaxle case 11 in the engine compartment 3. The internal combustion engine 6 is implemented by a fourcycle gasoline engine in which the piston completes for separate strokes: intake, compression, combustion, and exhaust.

The generator 21, as can be seen in Fig. 1, works to generate electric power using power produced by the internal combustion engine 6. The traction motor 22 is driven by electric power which is produced by the generator 21 or stored in a battery, not shown. The power or torque produced by the traction motor 22 is transmitted to the right and left drive shafts 24 through the differential 23. When the electric vehicle 1 is decelerating, the traction motor 22 works to generate electricity using power transmitted from the right and left drive shafts 24 thereto through the differential 23. The electric vehicle 1 is, therefore, designed as a series hybrid.

The electric vehicle 1 is, as illustrated in Figs. 1, 2, 3, and 4, also equipped with the bracket 40 which retains the PCU 30 on the transaxle case 11. The bracket 40 is arranged to extend parallel to the bottom surface of the PCU 30 and oriented obliquely to have a front portion located at a level lower than a rear portion thereof in a vertical direction of the electric vehicle 1.

The bracket 40 includes the front support 41, the rear support 42, and the connecting member 43. The front support 41 is fixed to the front end of the PCU 30. The rear support 42 is fixed to the rear end of the PCU 30. The connecting member 43 creates a mechanical joint between the front support 41 and the rear support 42. The bracket 40 may be casted or made using cutting techniques to form the front support 41, the rear support 42, and the connecting member 43 integrally with each other. The bracket 40 may alternatively be made by joining or welding three discrete parts: the front support 41, the rear support 42, and the connecting member 43 together.

The front support 41 has the vibration isolation bushes 45 fit on ends thereof which are aligned with each other in a width direction of the electric vehicle 1. The bolts 45A pass through the vibration isolation bushes 45. The front support 41 is attached firmly to a front lower portion of the PCU 30 through the vibration isolation bushes 45 using the bolts 45A.

Similarly, the rear support 42 has the vibration isolation bushes 45 fit on ends thereof which are aligned in the width direction of the electric vehicle 1. The bolts 45A pass through the vibration isolation bushes 45. The rear support 42 are attached firmly to a rear lower portion of the PCU 30 through the vibration isolation bushes 45 using the bolts 45A.

The vibration isolation bushes 45 are made of an elastic material and disposed between the part of the PCU 30 and the front support 41 and between the part of the PCU 30 and the rear support 42 to absorb mechanical vibration transmitted from the transaxle case 11 to the PCU 30 through the bracket 40.

The rear support 42, as clearly illustrated in Fig. 1, includes the rear wall 42A facing the dash panel 2. The electric vehicle 1 is a mini-vehicle or light automobile with the small-sized engine compartment 3, so that intervals between the PCU 30 and the dash panel 2 and between the transaxle case 11 and the dash panel 2 are small, and an interval between the rear wall 42A of the rear support 42 and the dash panel 2 is also small.

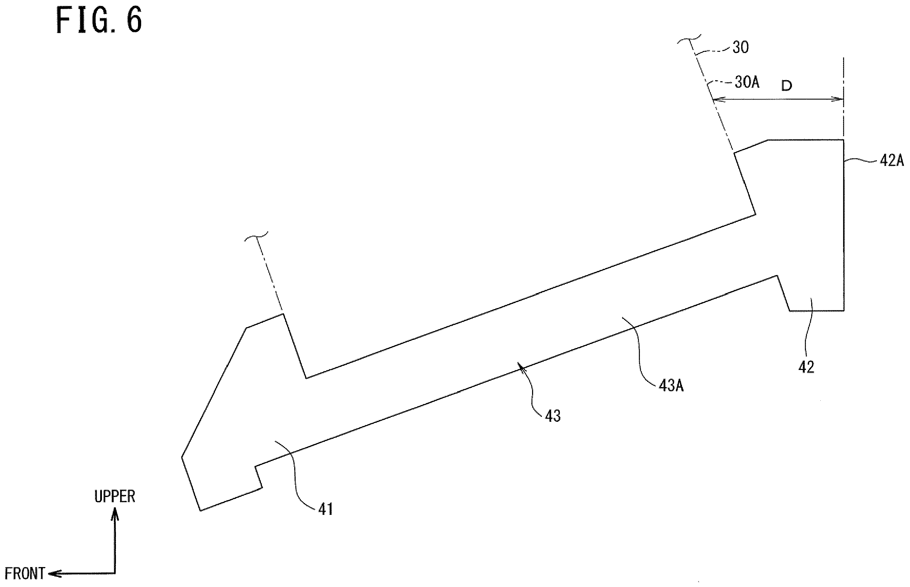

The rear support 42 is, as illustrated in Fig. 6, disposed in back of the rear surface 30A of the PCU 30. The rear wall 42A is shaped to have the interval D between the rear wall 42A and the rear surface 30A of the PCU 30, as defined in the longitudinal direction of the electric vehicle 1. The interval D increases from a lower side to an upper side of the electric vehicle 1. The rear wall 42A has an upper end located at a level higher than a rear end of the bottom surface of the PCU 30 in the upward direction of the electric vehicle 1.

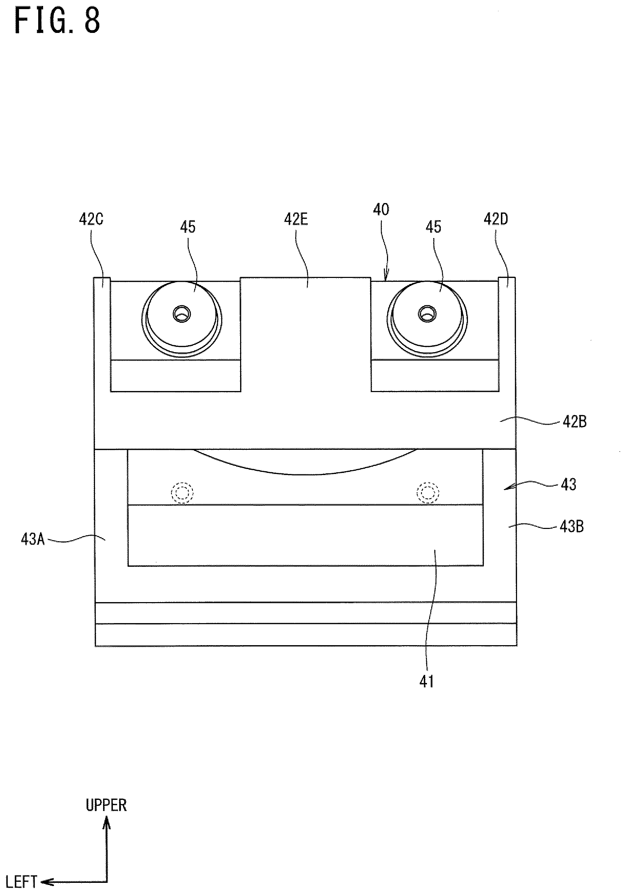

The rear wall 42A, as illustrated in Fig. 8, includes the lower rear wall 42B, the side rear walls 42C and 42D, and the center rear wall 42E. The lower rear wall 42B is made of a lower portion of the rear support 42. The side rear walls 42C and 42D are made of upper end portions of the rear support 42 which face each other in the width direction of the electric vehicle 1. The center rear wall 42E is made of a central portion of an upper portion of the rear support 42 in the width direction of the electric vehicle 1. The vibration isolation bushes 45 are disposed on portions of the bracket 40 between the side rear wall 42C and the center rear wall 42E and between the side rear wall 42D and the center rear wall 42E.

The transaxle case 11, as clearly illustrated in Fig. 2, includes the hollow cylindrical right case 12 and the hollow cylindrica left case 13. The right case 12 and the left case 13 are arranged adjacent each other in the width direction of the vehicle 1. The right case 12 and the left case 13 are joined together at the bosses 15 using the case-fastening bolts 46. The left case 13 has an opening formed in a left end thereof. The transaxle case 11 also includes the side cover 14 which is in a disc-shape as a whole. The side cover 14 is secured to the left end of the left case 13 to close the opening of the left case 13.

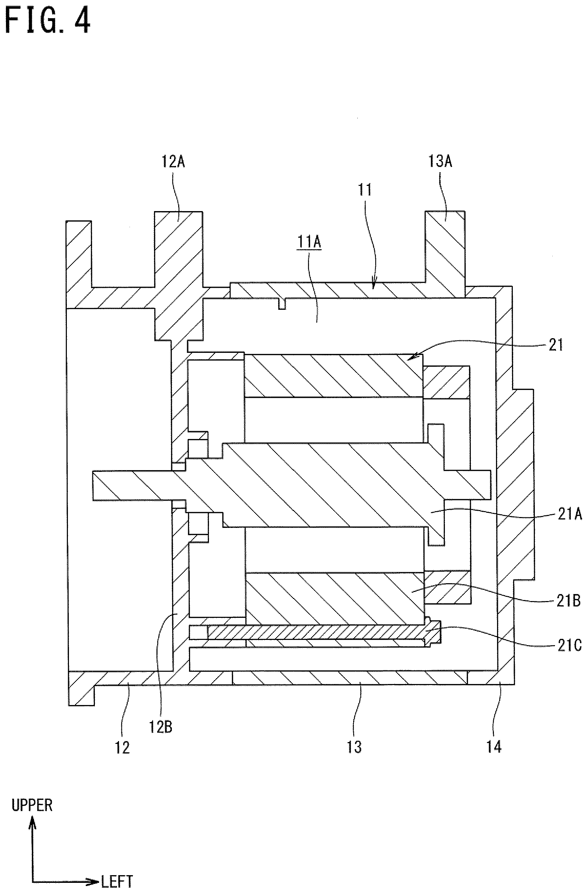

The generator 21 is, as clearly illustrated in Fig. 4, disposed in the storage chamber 11A surrounded or defined by the right case 12 and the left case 13. The storage chamber 11A also has the traction motor 22 disposed therein. The right case 12 also has the dividing wall 12B formed near the right end thereof. The dividing wall 12B extends vertically to divide the inner space of the right case 21 into two chambers arranged adjacent each other in the width direction of the electric vehicle 1. The dividing wall 12B closes the right side of the storage chamber 11A.

The generator 21 includes the rotor 21A and the stator 21B. The rotor 21A is rotated by torque produced by the internal combustion engine 6. The stator 21B is firmly secured to the right case 12 using stator fastening bolts 21C. The stator 21B is, therefore, not held by the left case 13, so that it is supported by the right case 12 in a cantilever form. This will cause the stator 21B that is a relatively heavyweight object to swing vertically at a point where the stator 21B is supported by the right case 12, which results in large flexural vibration of the right case 12 and the left case 13.

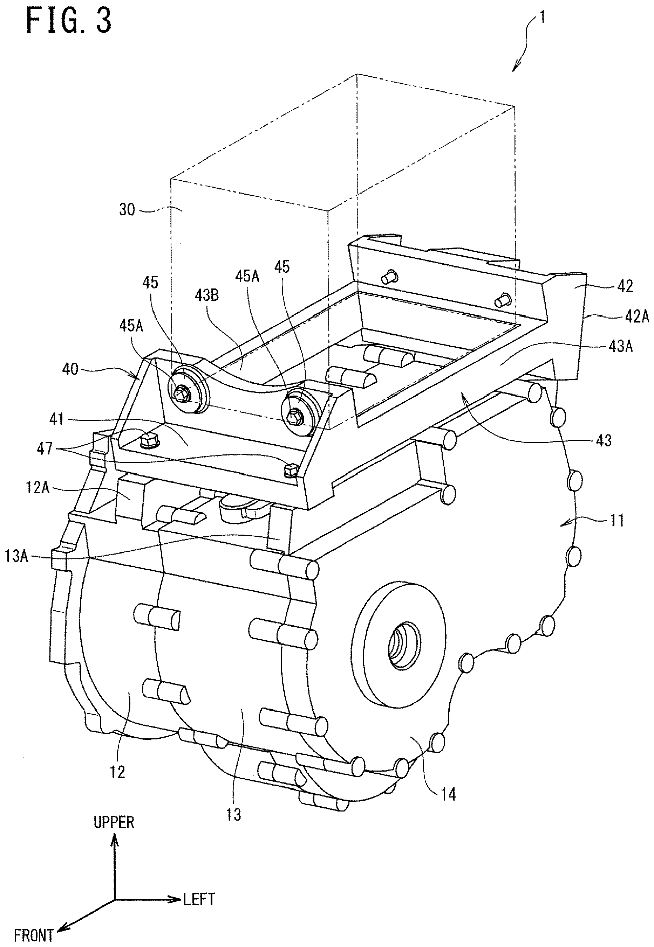

Referring back to Figs. 2 and 3, the bracket 40 is firmly secured to the right case 12 and the left case 13 using the bracket fastening bolts 47. The right case 12 and the left case 13 have the seats 12A and 13A formed on upper portions thereof, respectively. The seats 12A and 13A protrude in the upward direction. The seats 12A and 13A also extend in the longitudinal direction of the electric vehicle 1. The bracket 40 is fixed at the front support 41 and the rear support 42 to the seat 12A of the right case 12 and the seat 13A of the left case 13 using the bracket fastening bolts 47.

The seat 12A of the right case 12 is, as illustrated in Fig. 4, aligned with the dividing wall 12B in a direction perpendicular to the axial direction of the transaxle case 11 (i.e., the width direction of the electric vehicle 1). In other words, the seat 12A is arranged directly above the dividing wall 12B. This layout of the seat 12A causes the load, as exerted by the PCU 30 on the seat 12A of the right case 12 through the bracket 40, to be absorbed or borne by the dividing wall 12B.

The seat 13A of the left case 13 is located directly above a joint of the left end of the left case 13 to the side cover 14, so that the load, as exerted by the PCU 30 on the left case 13 through the bracket 40, is absorbed or borne by the side cover 14.

The connecting member 43 of the bracket 40, as shown in Figs. 3, 5, 7, and 8, includes a pair of side members 43A and 43B. The side members 43A and 43B are arranged on right and left sides of the PCU 30 away from each other in the width direction of the electric vehicle 1.

The three-phase electrical cables 31 serving as power cables are, as illustrated in Fig. 1, connected to the side portion of the PCU 30 which faces in the width direction of the electric vehicle 1. Specifically, the three-phase electrical cables 31 extend downward from the left side portion of the PCU 30 and connect with the upper portion of the transaxle case 11. The side member 43A is arranged outside the three-phase electrical cables 31 on the PCU 30 in the width direction of the electric vehicle 1. In other words, the three-phase electrical cables 31 extend through a clearance between the side member 43A and the transaxle case 11 between the left and right side members 43A and 43B.

The high-voltage cable 32 is connected to an upper portion of a rear surface of the PCU 30. The high-voltage cable 32 extends rearward from the rear surface of the PCU 30 and connects with a storage battery. The battery stores therein electrical power which is delivered to the PCU 30 through the high-voltage cable 32.

As apparent from the above discussion, in the electric vehicle 1 in this embodiment, the bracket 40 includes the front support 41, the rear support 42, and the connecting member 43. The front support 41 is secured to the front end of the PCU 30. The rear support 42 is secured to the rear end of the PCU 30. The connecting member 43 is configured to connect the front support 41 and the rear support 42 together.

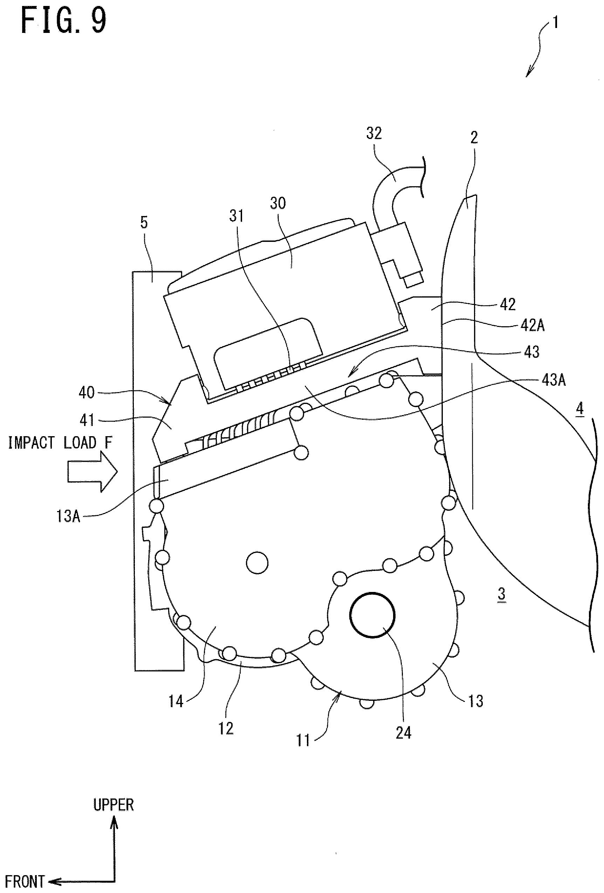

The front support 41 and the rear support 42 of the bracket 40 is, as described above, joined together using the connecting member 43, thereby minimizing a risk that the front support 41 and the rear support 42 may be moved or inclined backward, as demonstrated in Fig. 9, when the engine compartment 3 is compressed in the longitudinal direction of the electric vehicle 1 upon a head-on collision of the electric vehicle 1, so that the impact load F is applied from the front side of the electric vehicle 1 to the PCU 30. This ensures the stability in keeping the PCU 30 at the same inclined orientation as before the impact load F acts on the PCU 30. The avoidance of backward inclination of the front support 41 and the rear support 42 eliminates a risk that the bracket 40 may be moved in the longitudinal direction of the electric vehicle 1 and also keeps the interval between the bracket 40 and the transaxle case 11 constant, in other words, prevents the PCU 30 from rotating to have the lower surface thereof close to the upper surface of the transaxle case 11 following the backward inclination of the front support 41 and the rear support 42.

The rear support 42 has the rear wall 42A facing the dash panel 2. The rear wall 42A is shaped to have the interval D, as shown in Fig. 6, between itself and the rear surface 30A of the PCU 30 in the longitudinal direction of the electric vehicle 1. The interval D increases from the lower side to the upper side of the electric vehicle 1.

The above layout of the rear wall 42A of the rear support 42 will cause the rear wall 42A to physically contact the dash panel 2 earlier than the rear surface 30A of the PCU 30 does when the PCU 30 is moved backward along with the transaxle case 11 upon a head-on collision of the electric vehicle 1. This ensures required spacing between the rear surface 30A of the PCT 3 and the dash panel 2 after the head-on collision, thereby protecting the rear surface 30A of the PCU 30 or a peripheral part, such as the high-voltage cable 32, from collision with the dash panel 2.

The above arrangements avoid damage to the PCU 30 which arises from contact of the PCU 30 with the dash panel 2 upon a head-on collision of the electric vehicle 1.

In the electric vehicle 1 in this embodiment, the transaxle case 11 includes the right case 12 and the left case 13 which are arranged adjacent each other in the width direction of the electric vehicle 1 and securely fastened together by the case-fastening bolts 46. The generator 21 and the traction motor 22 are disposed inside the storage chamber 11A enclosed by the right case 12 and the left case 13. The bracket 40 is securely attached to the right case 12 and the left case 13 using the bracket fastening bolts 47.

The bracket 40 is, as described above, joined, by the fastening bolts 47, to the right case 12 and the left case 13 arranged adjacent each other in the width direction of the electric vehicle 1, thereby enabling the size of the bracket 40 in the width direction of the electric vehicle 1 to extend across both the right case 12 and the left case 13 to enhance the stiffness of the bracket 40 against an impact load applied from the front side of the electric vehicle 1. This results in an increased resistance of the bracket 40 against deformation caused by an impact load applied rom the front side of the electric vehicle 1.

The bracket 40 also functions as a stiffener to increase the stiffness of the transaxle case 11 to decrease mechanical vibration arising from operation of the generator 21 or the traction motor 22.

In the electric vehicle 1 in this embodiment, the connecting member 43 includes a pair of side members 43A and 43B arranged on sides of the PUC 30 away from each other in the width direction of the electric vehicle 1.

The above structure of the connecting member 43 enables the connecting member 43 to be reduced in weight and enhances the stiffness of joint of the front support 41 and the rear support 42.

In the electric vehicle 1 in this embodiment, the three-phase electrical cables 31 are connected to the side portion of the PCU 30 which faces in the width direction of the electric vehicle 1. The side members 43A and 43B are arranged outside the three-phase electrical cables 31 on the PCU 30 in the width direction of the electric vehicle 1.

The above layout of the side members 43A and 43B of the connecting member 43 serves to protect the three-phase electrical cables 31 against impact load exerted from the side of the electric vehicle 1 upon a side collision thereof.

While the present invention has been disclosed in terms of the preferred embodiment in order to facilitate better understanding thereof, it should be appreciated that the invention can be embodied in various ways without departing from the principle of the invention. Therefore, the invention should be understood to include all possible equivalents or modifications to the shown embodiment which can be embodied without departing from the principle of the invention as set forth in the appended claims.

## Claims

1. An electric vehicle comprising:
a transaxle case which is disposed in an engine compartment arranged in front of a dash panel in an electric vehicle and in which a rotating electrical machine is disposed;
an electric power controller which is arranged above the transaxle case and works to control an operation of the rotating electrical machine; and
a bracket which secures the electric power controller to the transaxle case, wherein
the electric power controller is oriented to have a front portion located at a level lower than a rear portion thereof in a vertical direction of the electric vehicle,
the bracket includes a front portion, a rear portion, and a connecting member, the front portion being secured to a front end of the electric power controller, the rear portion being secured to a rear end of the electric power controller, the connecting member being configured to connect the front support and the rear support together,
the rear support has a rear wall facing the dash panel, the rear wall being shaped to have an interval between itself and a rear surface of the electric power controller in a longitudinal direction of the electric vehicle, the interval being selected to increase from a lower side to an upper side of the electric vehicle.

2. The electric vehicle as claimed in claim 1, wherein the transaxle case includes a first case and a second case which are arranged adjacent each other in a width direction of the electric vehicle and fastened together using a case fastening bolt,
the rotating electrical machine is disposed inside a storage chamber enclosed by the first case and the second case, and
the bracket is securely attached to the first case and the second case using bracket fastening bolts.

3. The electric vehicle as claimed in claim 1 or 2, wherein the connecting member includes a pair of side members which are arranged on sides of the electric power controller away from each other in a width direction of the electric vehicle.

4. The electric vehicle as claimed in claim 3, wherein a power cable is connected to a side portion of the electric power controller which faces in the width direction of the electric vehicle, and the side members are arranged outside the power cable on the electric power controller in the width direction of the electric vehicle.
